# FASCICULE DE BREVET EUROPEEN

(11) **EP 2 814 702 B1**
(45) Date de publication et mention de la délivrance du brevet: **01.05.2019**
(21) Numéro de dépôt: 13704406.1
(22) Date de dépôt: 11.02.2013
(51) Int. Cl.: B60T 7/06, B60R 21/09, F16B 21/12, G05G 1/445, F16B 21/08

(54) **SYSTEME DE FIXATION D'UN AXE DANS UN ELEMENT D'UN VEHICULE AUTOMOBILE**
AXELFIXIERUNGSSYSTEM EINES KRAFTFAHRZEUGTEILS
AXE FIXATION MEANS ON A VEHICLE ELEMENT

(30) Priorité: 14.02.2012 FR 1251350
(43) Date de publication de la demande: 24.12.2014
(73) Titulaire: Renault S.A.S., 92100 Boulogne-Billancourt (FR)
(72) Inventeur: MERLIN, Fabrice, F-91810 Vert Le Grand (FR)
(86) Numéro de dépôt international: PCT/EP2013/052638
(87) Numéro de publication internationale: WO 2013/120789

(56) Documents cités:
- WO-A1-02/42651
- DE-A1- 10 336 799
- DE-C1- 19 615 487

## Description

L'invention se rapporte à un système de fixation d'un axe dans un élément de véhicule automobile. Pour des raisons de maintenance ou de réparation, il est de pratique courante de démonter certaines pièces d'un véhicule automobile afin de vérifier leur état et de les réparer éventuellement, avant de les remonter ensuite au même emplacement sur ledit véhicule. Dans la plupart des cas, ces opérations de démontage/remontage sont effectuées par des professionnels, à l'insu de l'usager, et ne laissent généralement subsister aucune trace visible, si bien qu'il demeure impossible pour ledit usager de savoir si telle ou telle pièce de son véhicule a fait l'objet d'un démontage, puis d'un remontage. Le document DE10336799 A1 décrit un système de fixation d'un axe de pédale, sans moyens de détection d'un démontage.

Le système de fixation selon l'invention, permet le démontage puis le remontage d'un axe dans un élément d'un véhicule, la phase de démontage étant configurée pour entrainer une modification structurelle de cet axe, de manière à ce qu'un usager puisse détecter un éventuel démontage préalable de l'axe, une fois que ledit axe a été remonté dans l'élément du véhicule. Ainsi, dans le cas, par exemple, d'un fonctionnement ultérieur défectueux de cet axe, l'usager pourra savoir si ce mauvais fonctionnement est imputable à une usure ou à un défaut de fabrication, ou s'il résulte d'un remontage de mauvaise qualité suite à un démontage préalable par un organisme extérieur.

L'invention a pour objet un système de fixation d'un axe pour pédale dans un élément d'un véhicule automobile, permettant le montage et le démontage dudit axe au moyen d'une rotation réversible dans ledit élément. La principale caractéristique d'un système de fixation selon l'invention, est que ledit axe subit une modification structurelle lors de son démontage par rotation de l'élément, ladite modification demeurant détectable une fois que ledit axe a été remonté dans ledit élément. L'objet d'un système de fixation selon l'invention est de pouvoir laisser une trace facilement détectable par un usager, d'un démontage de l'axe. La vérification de cette trace doit pouvoir s'opérer directement et facilement, au moyen d'une simple détection visuelle ou tactile, sans avoir recours à un outillage particulier ou à une manipulation compliquée de l'axe. En effet, le démontage de l'axe de l'élément dans lequel il est monté, peut engendrer, par exemple, une marque de type rainure ou encoche sur ledit axe. Il peut également provoquer, par exemple, la pliure ou l'arrachement d'une languette, ou l'écrasement d'un plot. L'essentiel demeure que le démontage de l'axe entraine de façon générale, une empreinte sur ledit axe, qui soit facilement et directement détectable. Il est supposé que la modification structurelle de l'axe, est réalisée de manière à ne pas entraver la fonction originelle de l'axe dans l'élément auquel il est solidarisé. De même, il est supposé que cette modification n'entrave pas le remontage de l'axe dans l'élément du véhicule. Le système de fixation selon l'invention, est applicable à tout type d'axe pouvant être monté sur un élément du véhicule. Le terme « élément » est général et désigne toute sorte de pièces de carrosserie ou d'équipement, présentes usuellement dans un véhicule automobile. La pédale est une pédale d'actionnement conventionnelle pouvant être rencontrée dans un véhicule automobile, comme par exemple, une pédale d'accélérateur, une pédale de frein ou une pédale d'embrayage.

L'axe comprend une excroissance apte à subir une contrainte lors du démontage dudit axe par rotation, ladite excroissance réagissant à ladite contrainte en modifiant son apparence. Avantageusement, cette excroissance peut, par exemple, désigner une patte, une languette ou un plot placé de telle manière sur ledit axe, qu'elle est directement impactée par l'opération de démontage, en étant pliée ou écrasée ou arrachée. Cette excroissance n'exerce aucune fonction particulière au sein de l'axe, et ne justifie sa présence que pour servir de témoin de démontage dudit axe. Cette excroissance est élaborée de façon à être de taille réduite et à avoir une masse la plus allégée possible afin de n'avoir aucune influence néfaste sur ledit axe.

Selon un premier mode de réalisation préféré d'un système de fixation selon l'invention, la rotation de l'axe dans l'élément du véhicule lors d'une opération de démontage, provoque la rupture de l'excroissance. Pour cette configuration, il est supposé que l'excroissance est visible lorsque l'axe a été monté une première fois sur l'élément, et qu'elle ne peut donc plus être vue, une fois que l'axe a été remonté après avoir été démonté. De plus, l'excroissance ne doit pas être trop imposante ou trop résistante mécaniquement, car elle risquerait de compromettre le démontage de l'axe.

Avantageusement, l'excroissance est une patte qui prend naissance sur l'axe et qui s'étend selon une direction longitudinale dudit axe, ladite excroissance saillant latéralement dudit axe. Il s'agit d'une configuration pour laquelle la patte est de petite dimension par rapport à l'axe, et qui permet une rupture facile et sans effort de ladite patte. Le fait que l'excroissance saille latéralement de l'axe, signifie qu'elle contribue à élargir localement ledit axe.

De façon préférentielle, la patte est située au niveau d'une extrémité de l'axe.

De façon avantageuse, la patte a des aptitudes à la déformation élastique. De cette manière, la patte pourra facilement se déformer de manière à s'adapter aux différents reliefs de l'élément, lorsque l'axe sera monté pour la première fois dans ledit élément.

Préférentiellement, la patte est réalisée en plastique. Ainsi, une telle patte est facilement déformable élastiquement et ne vient pas alourdir l'axe. De même, avec ce type de matériau, la patte présente une certaine rigidité qui pourra favoriser sa rupture.

Avantageusement, l'axe et la patte sont réalisés dans le même matériau et forment une seule et même pièce. Cette configuration contribue à simplifier le procédé de fabrication de cet axe doté d'une excroissance, en regroupant, en une seule opération, la fabrication de ces deux éléments. Lorsque l'axe et l'excroissance sont réalisés tous les deux en plastique, ils constituent une pièce résultante allégée, contribuant à réduire le poids global du véhicule.

De façon préférentielle, la patte se retrouve logée dans un évidement de l'élément et qui est bordé par deux parois, l'amplitude de rotation pour démonter ledit axe étant supérieure à l'angle délimitant l'arc de cercle joignant les deux parois de l'évidement. Autrement dit, lorsque l'axe est mis en rotation pour être démonté, la patte vient d'abord en butée contre l'une des deux parois de l'évidement, avant d'être cisaillée par ladite paroi lorsque la rotation de l'axe se poursuit. Ainsi, lors de son démontage, l'axe sera retiré de l'élément du véhicule en étant dépourvu totalement ou partiellement de sa patte.

Selon un autre mode de réalisation préféré d'un système de montage selon l'invention, l'excroissance est une patte ayant des aptitudes à la déformation plastique, le démontage de l'axe entrainant une déformation définitive de ladite patte, demeurant visible une fois que l'axe a été remonté dans ledit élément. Autrement dit, le démontage de l'axe par rotation entraine une déformation durable de la patte, et une fois que l'axe est remonté par rotation inverse dans l'élément du véhicule, la patte n'occupe plus son emplacement initial. Ce décalage de la patte est un témoin visuel ou tactile, permettant d'assurer à un usager, que l'axe a été démonté au moins une fois avant d'avoir été remonté.

Avantageusement, l'axe constitue l'axe de rotation d'une pédale d'accélérateur, ou d'une pédale de frein ou d'une pédale d'embrayage. En effet, une pédale d'actionnement est un organe du véhicule fortement sollicité lors des phases d'utilisation du véhicule, et qui nécessite donc des interventions d'entretien, de réparation ou de changement. Lorsqu'un usager récupère son véhicule, il doit pouvoir être informé qu'un démontage a eu lieu. Un système de fixation selon l'invention, lui fournit cette opportunité d'information.

Les systèmes de montage selon l'invention, présentent l'avantage d'être efficaces, car le verdict concernant un démontage préalable potentiel de l'axe est indiscutable. Ils ont de plus l'avantage d'être simples à mettre en oeuvre, et d'être peu encombrants, car ils ne nécessitent aucun outillage particulier ni aucune manipulation supplémentaire pour savoir si ledit axe a été démonté. Enfin, ils présentent l'avantage d'être peu coûteux, car ils impliquent une patte témoin de petite dimension, de géométrie usuelle et réalisée dans un matériau communément utilisé et peu onéreux.

On donne ci-après, une description détaillée, d'un mode de réalisation préféré d'un système de fixation selon l'invention, en se référant aux figures 1 à 4.
- La figure 1 est une vue en perspective d'une extrémité d'un axe d'une pédale, ledit axe étant doté d'une patte témoin,
- La figure 2 est une vue en perspective partielle montrant l'interaction entre l'extrémité de l'axe portant la patte témoin, et l'élément du véhicule dans lequel est destiné à être monté ledit axe,
- La figure 3 est une vue de face de l'interaction entre l'extrémité de l'axe portant la patte témoin, et l'élément du véhicule dans lequel est destiné à être monté ledit axe,
- La figure 4 est une vue en perspective de la partie de l'élément du véhicule destinée à recevoir l'axe de la pédale.

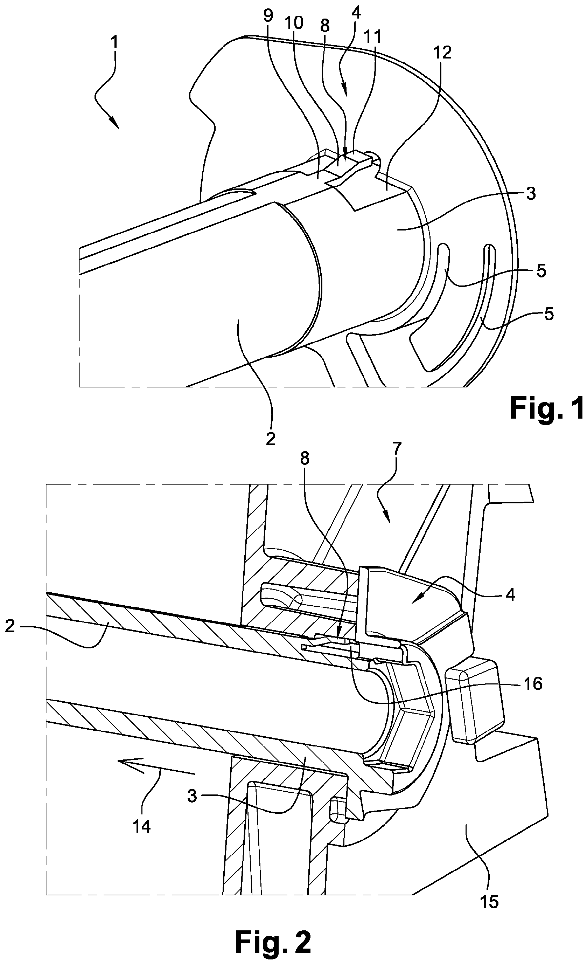

En se référant à la figure 1, un axe 1 de pédale d'actionnement, pouvant par exemple être une pédale d'accélérateur, est constitué par un tube creux 2 cylindrique, dont la partie distale de l'une 3 de ses extrémités se termine par une paroi plane 4 élargie, s'inscrivant dans un plan perpendiculaire à l'axe de révolution dudit tube 2. Cette paroi plane 4 a un contour arrondi et peut donc être assimilée à un disque de faible épaisseur. Cette paroi élargie 4 comporte un système de fentes incurvées 5, destinées à coopérer avec une au moins un relief 6 d'un élément 7 du véhicule pour assurer la fixation dudit axe 1 dans ledit élément 7. Au niveau de cette extrémité 3, l'axe porte une patte 8 déformable, située en léger retrait de la paroi plane élargie 4. Cette patte 8 comporte en continuité les uns des autres, trois segments 9, 10,11 plans, dont l'un 10 se retrouve en position centrale et les deux autres 9,11 en position d'extrémité. Les deux segments d'extrémité 9,11 sont parallèles et sont reliés entre eux par le segment central 10, qui se retrouve dans une position inclinée par rapport auxdits segments d'extrémité 9,11. Cette inclinaison se traduit par un angle entre le segment central 10 et les deux segments d'extrémité 9,11 qui est inférieur à 90°, conférant à ladite patte 8 un aspect allongé. Cette patte 8, est solidaire d'un méplat 12 du tube 2, par l'intermédiaire de l'un 9 de ses deux segments d'extrémité, et s'étend vers la paroi élargie 4 en se surélevant progressivement par rapport à la surface externe du tube 2 et en suivant une direction parallèle à un axe longitudinal du tube 2. Cette patte 8, qui constitue une excroissance latérale dudit tube 2, possède une aptitude à la déformation élastique. En effet, une pression exercée, par exemple, sur son segment d'extrémité 11 surélevé, permet audit segment 11 de venir temporairement au contact de la surface externe du tube 2, un relâchement de ladite pression entrainant le retour dudit segment 11 vers sa position initiale. Préférentiellement, le tube 2 et la patte 8 constituent une seule et même pièce, et sont réalisés en matière plastique.

En se référant à la figure 2, l'axe 1 est introduit dans l'élément 7 dans lequel il va venir se fixer, en faisant d'abord pénétrer le tube 2 creux dans une ouverture 13 dudit élément 7 prévue à cet effet, puis en enfonçant ledit axe 1 dans ladite ouverture 13, suivant le sens indiqué par la flèche 14, jusqu'à ce que la paroi élargie 4 vienne en butée contre l'une 15 des parois dudit élément 7.

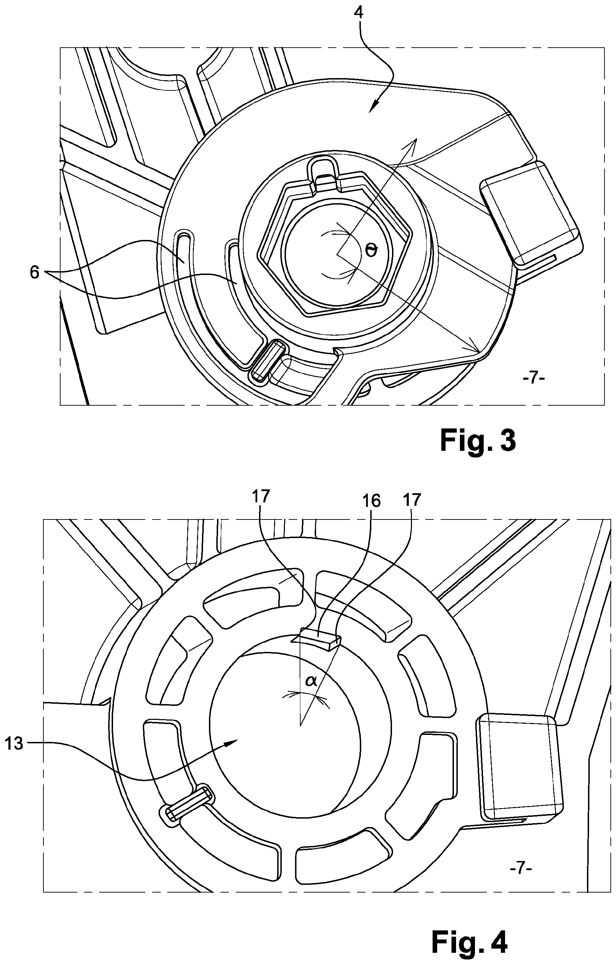

En se référant à la figure 4, l'ouverture 13 de l'élément 7 est constituée par un trou circulaire, dont la paroi interne comporte un évidement 16 sensiblement parallélépipédique, et assimilable à une encoche. Cet évidement 16 est délimité par deux parois latérales 17 se faisant face, lesdites parois 17 étant décalées l'une de l'autre par un angle d'ouverture a, dont le sommet correspond au centre de l'ouverture 13. Comme le montre la figure 2, lorsque l'axe 1 est monté dans l'élément 7, cet évidement 16 accueille la patte 8 déformable. Une fois que l'axe 1 est fixé dans l'élément 7, une légère rotation de l'axe 1, entraine ainsi une mise au contact de ladite patte 8 avec l'une des deux parois 17 de l'évidement 16.

En se référant à la figure 3, l'axe peut être démonté de l'élément 7, au moyen d'une rotation d'un angle θ, faisant sensiblement 90°, ledit angle θ demeurant largement supérieur à l'angle d'ouverture α délimitant les deux parois 17 latérales de l'évidement 16 du trou 13 de l'élément 7.

Un procédé de démontage puis de remontage de l'axe 1 dans l'élément 7 du véhicule suit les étapes suivantes. En supposant que l'axe 1 a été monté une première fois dans l'élément 7, de manière à ce que la patte 8 se retrouve dans l'encoche 16 du trou 13 dudit élément 7 et soit visible de l'extérieur, le démontage de cet axe 1 s'effectue au moyen d'une rotation d'un angle θ voisin de 90°. Une rotation d'une telle amplitude, va d'abord entrainer une mise au contact de la patte 8 contre l'une des deux parois latérales 17 de l'évidement 16, dont l'ouverture angulaire α est inférieure à l'angle θ, puis le cisaillement de ladite patte 8 par la paroi 17 dudit évidement 16 contre laquelle elle est au contact. La patte 8 est ainsi rompue lorsque l'axe 1 est retiré de l'élément 7 dans lequel il était fixé. Lorsque l'axe 1 est ensuite remonté dans ledit élément 7, la patte 8 qui a été préalablement arrachée lors de l'opération de démontage, n'est plus visible une fois que l'axe 1 a été verrouillé dans sa position de fixation dans ledit élément 7 du véhicule. Cette absence de patte 8, témoigne bien du fait que l'axe 1 a déjà été au moins une fois démonté de l'élément 7. L'usager du véhicule peut ainsi être informé que l'organisme qui s'est occupé de la maintenance, de l'entretien ou de la réparation de son véhicule, a démonté la pédale d'actionnement lors de son intervention.

## Revendications

1. Système de fixation d'un axe (1) pour pédale dans un élément (7) d'un véhicule automobile, permettant le montage et le démontage dudit axe (1) au moyen d'une rotation réversible dans ledit élément (7), ledit axe (1) subissant une modification structurelle lors de son démontage par rotation de l'élément (7), ladite modification demeurant détectable une fois que ledit axe (1) a été remonté dans ledit élément (7), **caractérisé en ce que** l'axe (1) comprend une excroissance (8) conçue pour subir une contrainte lors du démontage de l'axe (1) par rotation, ladite excroissance (8) réagissant à ladite contrainte en modifiant son apparence.

2. Système de fixation selon la revendication 1, **caractérisé en ce que** la rotation de l'axe (1) dans l'élément du véhicule lors d'une opération de démontage, provoque la rupture de l'excroissance (8).

3. Système de fixation selon la revendication 2, **caractérisé en ce que** l'excroissance est une patte (8) qui prend naissance sur l'axe (1,2) et qui s'étend selon une direction longitudinale dudit axe (1), et **en ce que** ladite excroissance (8) saille latéralement dudit axe (1).

4. Système de fixation selon la revendication 3, **caractérisé en ce que** la patte (8) est située au niveau d'une extrémité (3) de l'axe.

5. Système de fixation selon l'une quelconque des revendications 3 ou 4, **caractérisé en ce que** la patte (8) a des aptitudes à la déformation élastique.

6. Système de fixation selon l'une quelconque des revendications 3 à 5, **caractérisé en ce que** la patte (8) est réalisée en plastique.

7. Système de fixation selon l'une quelconque des revendications 3 à 6, **caractérisé en ce que** l'axe (1) et la patte (8) sont réalisés dans le même matériau et forment une seule et même pièce.

8. Système de fixation selon l'une quelconque des revendications 3 à 7, **caractérisé en ce que** la patte (8) se retrouve logée dans un évidement (16) de l'élément (7) et qui est bordé par deux parois, et **en ce que** l'amplitude de rotation pour démonter ledit axe (1) est supérieure à l'angle délimitant l'arc de cercle joignant les deux parois (17) de l'évidement (16).

9. Système de fixation selon la revendication 1, **caractérisé en ce que** l'excroissance est une patte (8) ayant des aptitudes à la déformation plastique, et **en ce que** le démontage de l'axe (1) entraine une déformation définitive de ladite patte (8), qui demeure visible une fois que l'axe (1) a été remonté dans l'élément (7) du véhicule.

10. Système de fixation selon l'une quelconque des revendications 1 à 9, **caractérisé en ce que** l'axe (1) constitue l'axe de rotation d'une pédale d'accélérateur.

## Patentansprüche

1. System zur Befestigung einer Achse (1) für ein Pedal in einem Element (7) eines Kraftfahrzeugs, welches die Montage und die Demontage der Achse (1) mittels einer umkehrbaren Drehung in dem Element (7) ermöglicht, wobei die Achse (1) bei ihrer Demontage durch Drehung des Elements (7) eine strukturelle Veränderung erfährt, wobei diese Veränderung erkennbar bleibt, nachdem die Achse (1) wieder in das Element (7) eingebaut worden ist, **dadurch gekennzeichnet, dass** die Achse (1) einen Ansatz (8) umfasst, der dafür ausgelegt ist, bei der Demontage der Achse (1) durch Drehung einer Beanspruchung ausgesetzt zu werden, wobei der Ansatz (8) auf diese Beanspruchung reagiert, indem er sein Aussehen ändert.

2. System zur Befestigung nach Anspruch 1, **dadurch gekennzeichnet, dass** die Drehung der Achse (1) in dem Element des Fahrzeugs bei einem Arbeitsgang der Demontage den Bruch des Ansatzes (8) hervorruft.

3. System zur Befestigung nach Anspruch 2, **dadurch gekennzeichnet, dass** der Ansatz eine Lasche (8) ist, die an der Achse (1, 2) ihren Anfang nimmt und die sich in einer Längsrichtung der Achse (1) erstreckt, und dadurch, dass der Ansatz (8) seitlich von der Achse (1) vorsteht.

4. System zur Befestigung nach Anspruch 3, **dadurch gekennzeichnet, dass** sich die Lasche (8) an einem Ende (3) der Achse befindet.

5. System zur Befestigung nach einem der Ansprüche 3 oder 4, **dadurch gekennzeichnet, dass** die Lasche (8) eine elastische Verformbarkeit aufweist.

6. System zur Befestigung nach einem der Ansprüche 3 bis 5, **dadurch gekennzeichnet, dass** die Lasche (8) aus Kunststoff hergestellt ist.

7. System zur Befestigung nach einem der Ansprüche 3 bis 6, **dadurch gekennzeichnet, dass** die Achse (1) und die Lasche (8) aus demselben Material hergestellt sind und ein und dasselbe Teil bilden.

8. System zur Befestigung nach einem der Ansprüche 3 bis 7, **dadurch gekennzeichnet, dass** die Lasche (8) in einer Aussparung (16) des Elements (7) aufgenommen wird, welche von zwei Wänden umrandet ist, und dadurch, dass der Betrag der Drehung, um die Achse (1) zu demontieren, größer als der Winkel ist, der den Kreisbogen begrenzt, welcher die zwei Wände (17) der Aussparung (16) vereinigt.

9. System zur Befestigung nach Anspruch 1, **dadurch gekennzeichnet, dass** der Ansatz eine Lasche (8) ist, die eine plastische Verformbarkeit aufweist, und dadurch, dass die Demontage der Achse (1) eine endgültige Verformung der Lasche (8) zur Folge hat, welche sichtbar bleibt, nachdem die Achse (1) wieder in das Element (7) des Fahrzeugs eingebaut worden ist.

10. System zur Befestigung nach einem der Ansprüche 1 bis 9, **dadurch gekennzeichnet, dass** die Achse (1) die Drehachse eines Gaspedals darstellt.

## Claims

1. Fixing system for a shaft (1) for a pedal in an element (7) of a motor vehicle, allowing said shaft (1) to be installed and removed by means of a reversible rotation of said element (7), said shaft (1) undergoing a structural modification during its removal by rotation of the element (7), said modification remaining detectable once said shaft (1) has been reinstalled in said element (7), **characterized in that** the shaft (1) comprises a protuberance (8) which is designed to suffer stress on removal of the shaft (1) by rotation, said protuberance (8) reacting to said stress by modifying its appearance.

2. Fixing system according to Claim 1, **characterized in that** rotation of the shaft (1) in the element of the vehicle during a removal operation causes breakage of the protuberance (8).

3. Fixing system according to Claim 2, **characterized in that** the protuberance is a lug (8) which begins on the shaft (1, 2) and extends in a longitudinal direction of said shaft (1), and **in that** said protuberance (8) protrudes laterally from said shaft (1) .

4. Fixing system according to Claim 3, **characterized in that** the lug (8) is situated at one end (3) of the shaft.

5. Fixing system according to one of Claims 3 or 4, **characterized in that** the lug (8) has elastic deformation properties.

6. Fixing system according to any of Claims 3 to 5, **characterized in that** the lug (8) is made of plastic.

7. Fixing system according to any of Claims 3 to 5, **characterized in that** the shaft (1) and the lug (8) are made of the same material and form a single part.

8. Fixing system according to any of Claims 3 to 7, **characterized in that** the lug (8) is housed in a recess (16) of the element (7) which is bordered by two walls, and **in that** the rotation amplitude for removal of said shaft (1) is greater than the angle delimiting the circle arc joining the two walls (17) of the recess (16) .

9. Fixing system according to Claim 1, **characterized in that** the protuberance is a lug (8) having plastic deformation properties, and **in that** removal of the shaft (1) causes a definitive deformation of said lug (8) which remains visible once the shaft (1) has been reinstalled in the element (7) of the vehicle.

10. Fixing system according to any of Claims 1 to 9, **characterized in that** the shaft (1) constitutes the rotation axis of an accelerator pedal.
